## Europäisches Patentamt

## European Patent Office

## Office européen des brevets

(11) Publication number: **0 132 409**
**B1**

# EUROPEAN PATENT SPECIFICATION

(45) Date of publication of patent specification: **21.09.88**

(51) Int. Cl.⁴: **B 23 Q 7/14,** B 23 Q 11/00

(21) Application number: **84305058.4**

(22) Date of filing: **25.07.84**

(54) **Work pallet changer for machine tool.**

(30) Priority: **25.07.83 JP 136363/83**

(43) Date of publication of application:
**30.01.85 Bulletin 85/05**

(45) Publication of the grant of the patent:
**21.09.88 Bulletin 88/38**

(84) Designated Contracting States:
**AT BE CH DE FR GB IT LI LU NL SE**

(56) References cited:
**EP-A-0 093 196**
**DE-A-1 961 567**
**DE-A-2 039 961**
**DE-A-2 338 498**
**DE-A-2 514 615**
**DE-A-2 819 616**
**DE-A-3 115 481**
**GB-A-1 223 105**
**GB-A-2 136 333**
**SOVIET ENGINEERING RESEARCH, vol. 3, no. 2, February 1983, pages 65-68, Melton Mowbray, Leicestershire, GB; S.E. GURYCHEV et al.: "Metal cutting machine tools. Determining the configuration of a machining centre"**

(73) Proprietor: **AIOI SEIKI KABUSHIKI KAISHA**
**1-9 Konoikeazakaidoshita**
**Itami-shi Hyogo-ken (JP)**

(72) Inventor: **Miyata, Ichiro c/o Aioi Seiki K.K.**
**1-9 Konoikeazakaidoshita**
**Itamishi Hyogoken (JP)**
Inventor: **Kitaura, Ichiro c/o Aioi Seiki K.K.**
**1-9 Konoikeazakaidoshita**
**Itamishi Hyogoken (JP)**
Inventor: **Yonezawa, Keitaro c/o Aioi Seiki K.K.**
**1-9 Konoikeazakaidoshita**
**Itamishi Hyogoken (JP)**

(74) Representative: **Alexander, Thomas Bruce et al**
**Boult, Wade & Tennant 27 Furnival Street**
**London EC4A 1PQ (GB)**

**Description**

Background of the invention
1. Field of the invention

The present invention relates to a work pallet changer for a machine tool such as a vertical or horizontal machining centre, milling machine, planer, shaper, boring machine or drilling machine, etc., the work pallet changer being adapted to change the work pallet on the table of the machine tool.

2. Description of the prior art

In recent years, machine tools are required to improve their operational efficiency as their power, speed and price are increased.

Therefore, it is intended to reduce the stopping time of a machine tool required for changing workpieces by the use of work pallets on which one or more workpieces are located. That is, one or more workpieces are fixed on or taken from a work pallet outside the machine tool while the operation of the machine tool is carrying on; then, after the operation is finished, workpieces will be changed, together with their respective pallet, by means of a work pallet changer. Such a work pallet changer is normally arranged as follows.

A pallet fixing device is provided on the table of a machine tool so as to support and hold a work pallet thereby. A pallet shift system, located in front of the machine tool, comprises a plurality of pallet mounting parts, each of which is moved between a pallet changing position in front of the pallet fixing device and a retracted position shifted from the pallet changing position. Each pallet is permitted to move between the pallet mounting part, located at pallet changing position, and the pallet fixing device.

Within this basic arrangement there are known several types of mechanism for moving each pallet mounting part between a pallet changing position and a more remote position:

I. A horizontal revolution type (published in US—PS 4,090,287) as shown in the accompanying Figure 22

Two pallet mounting parts 101 are disposed on the front side and rear side of a rotary table 102. The rotary table 102 can be turned in a horizontal plane around a central vertical axis 103 by one half-revolution in each step.

A pallet fixing device 106 is supported for rotation in a horizontal plane around a vertical axis 109 intersecting the table 105 of the machine tool 104. Initially, a work pallet 107 holding a finished workpiece (or workpieces) is moved from the pallet fixing device 106 to the pallet mounting part 101 that is located at the pallet changing position X. Then, the rotary table 102 is turned through half a revolution, so that the work pallet 107 holding the finished workpiece is moved to the remote position Y and another work pallet 108 holding an unfinished workpiece (or workpieces) is moved to the pallet changing position X. The change of work pallets 107, 108 at the table 105 is completed by the movement of the work pallet 108 holding the unfinished workpiece (or workpieces) from the pallet changing position X to the pallet fixing device 106.

II. Elevation type as shown in Figure 23

Two pallet mounting parts 111 properly separated from one another in a vertical direction are disposed on the top wall part and the bottom wall part of an elevation frame 112.

III. Horizontal circular conveyance type as shown in Figure 24

Six pallet mounting parts 121 are disposed spaced apart on the conveyor line 123 of a horizontal circular conveyor 122 separately from each other.

However, the usual arrangements abovementioned have the following disadvantages:

(i) In the horizontal revolution type (prior art I) and the horizontal circular conveyance type (prior art III), a plurality of pallet mounting parts is disposed side-by-side on a horizontal plane, and an excessively large space is necessary for the revolution or circulation, so that a large area is required to fit a pallet changer in front of the machine tool.

(ii) In the elevation type (prior art II), the work change operation at the lower pallet mounting part is inefficient because both right and left side walls of the elevation frame 112 inhibit the operation. In order to improve the efficiency of this work change operation, the distance between these side walls should be expanded sidewards further than the width of a work pallet; consequentially, the elevation frame is large and heavy, and a driving system for elevating the elevation frame has a larger power consumption.

(iii) In the horizontal revolution type, the elevation type and the horizontal circular conveyance type, the chip or swarf removing operation is troublesome and hazardous for an operator, because chips or swarf must be swept out or washed out or blown out from an upwardly facing surface of a work pallet.

(iv) In order to improve the efficiency of chip or swarf removal it may be possible to provide a chip removing system at a different stage; however, a separate chip removing system and a correspondingly extensive conveyor are then required, at greater cost and greater occupation of space. Moreover a double-trip conveyance of a work pallet between a pallet changer and a chip removing system is excessively time-consuming.

A work pallet changer which has the features of the precharacterising part of claim 1 is shown in GB—A—1223105.

Summary of the invention

This invention provides a work pallet changer for use with a machine tool which has a horizontal table adapted for the accommodation of work pallets, the changer comprising a shift system which includes a rotary carrier rotatable about a horizontal axis and having a plurality of pallet-mounting stations each of which is adapted for holding a pallet and on rotation moves between a pallet-changing position, suitable for the transfer of a pallet to or from the table, and another position displaced from the pallet-changing position, and a push pull transfer system for moving the pallet between a pallet fixing device on the table of the machine tool and a pallet-mounting part located at the pallet-changing position, characterised in that each pallet-mounting station includes a straight guide rail for engagement with the pallet so as to guide the movement of a pallet between the table and the pallet-changing position along a straight path, the guide rail being at right angles to the said rotary axis.

A pallet changer according to a preferred form of the present invention can provide the following advantages.

(i) The necessary plan area for installation of the pallet changer according to the present invention may be much smaller than for changers in which pallet mounting stations are disposed in a single horizontal plane, and in particular the changer need occupy only a narrow space in front of a machine tool.

(ii) Each pallet mounting station may be made small in size without unnecessary sideways extension and, because the rotary carrier can be well balanced for rotation, the size and power consumption of the driving means is small.

(iii) Chips or swarf may be automatically and efficiently removed by letting them fall from the work pallet engaged on the pallet mounting station while the pallet mounting station faces downwards. In this case, a washing system is easily and conveniently disposed under the rotary carrier.

(iv) A separate chip removing system and extended conveyor for carrying each work pallet to and from the chip removing system are unnecessary, and accordingly space, expense and time may be saved.

(v) If the push-pull system for moving a work pallet between a pallet mounting part located at the pallet changing position and the pallet fixing device has at least a driving means of the push-pull system disposed outside of the rotary carrier, the mechanism may be simplified in comparison with the case that push-pull systems are provided one for each pallet mounting station because a single driving means may be provided for any work pallet on any pallet mounting station.

The present invention will be understood more readily by reference to the following detailed description in conjunction with the drawings.

Brief description of the drawings

In the drawings:—

Figures 1 to 9 represent a first preferred embodiment of the present invention, wherein:

Figure 1 is a plan view of the work pallet changer disposed in front of a machine tool;

Figure 2 is a front elevational view of the same;

Figure 3 is a side elevational view of the same;

Figure 4 is a perspective view of the important parts of the same;

Figure 5 is an enlarged view of the part V in Figure 2;

Figure 6 is a horizontal cross-sectional view of the part VI in Figure 1;

Figure 7 is a cross-sectional view along lines VII—VII of Figure 6;

Figure 8 is a front vertical sectional view of the part VIII in Figure 1; and

Figure 9 is a schematic perspective view with a pallet conveyance bogie.

Figure 10 is a plan view of the important parts of the first modified embodiment of the pallet revolution system of the first preferred embodiment;

Figure 11 is a partially sectioned side elevation of the driving means for a rotary carrier; and

Figure 12 a schematic view of the important portions of the rotary carrier of a second embodiment.

Figures 13 to 17 illustrate the second preferred embodiment, wherein:

Figure 13 is a plan view of the main part of the work pallet changer;

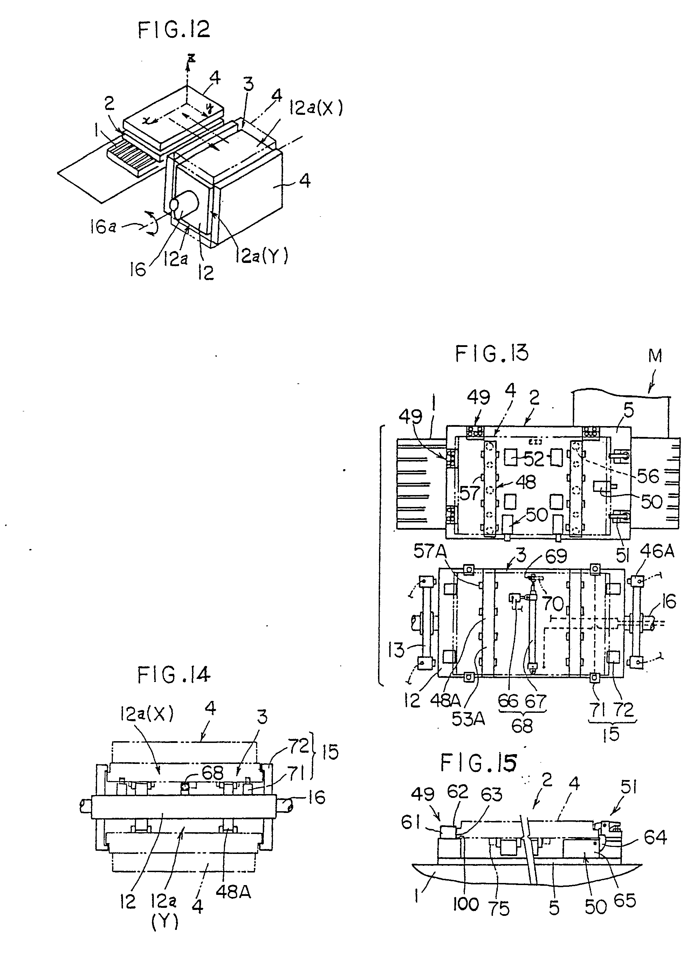

Figure 14 is a front elevation view of the same;

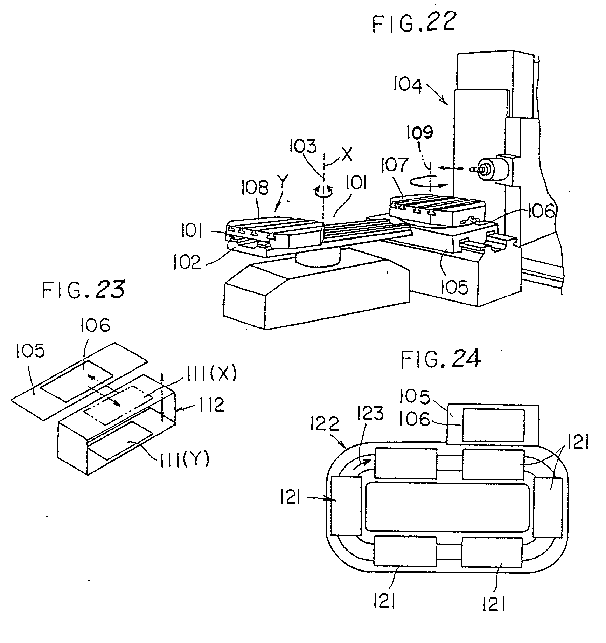

Figure 15 is a front elevation view of a pallet fixing device; and

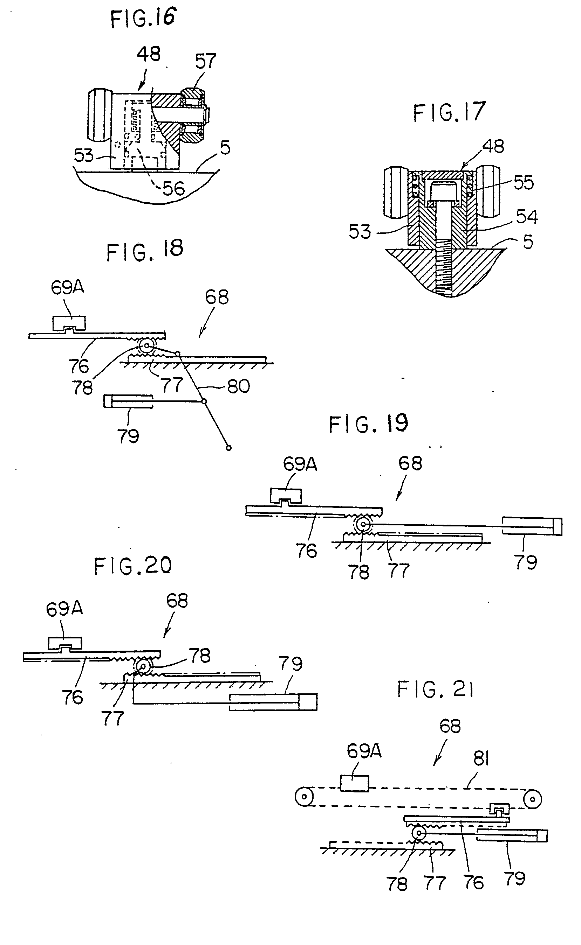

Figure 16 and Figure 17 are vertical sectional front views of a carry roller arrangement.

Figures 18 to 21 individually illustrate push-pull mechanisms of a push-pull system modified from the second preferred embodiment.

Figures 22 to 24 individually illustrate (as previously mentioned) a work pallet changer according to various prior arts, wherein:

Figure 22 is a perspective view of a horizontal revolution type;

Figure 23 is a schematic perspective view of elevation type; and

Figure 24 is a schematic plan view of horizontal circular conveyance type.

Detailed description of the preferred embodiments

The first preferred embodiment

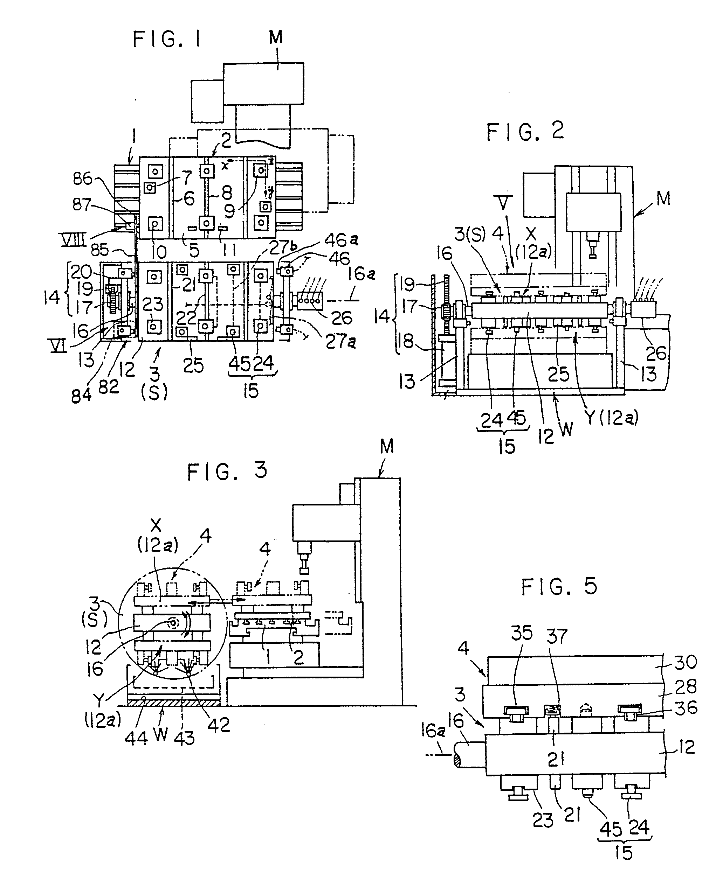

Now, referring to Figures 1 to 5, a pallet fixing device 2 is fastened on the table 1 of a vertical machining centre M, and a pallet revolution system 3 is disposed in front of the machine tool M, as the pallet shift system, so as to accomplish the work change operation of the machine tool M by means of a double-trip transference of the work pallet 4 between the pallet fixing device 2 and the pallet revolution system 3.

The pallet fixing device comprises a clamp system 10 and a pair of right and left stoppers 11. The clamp system 10 comprises a base plate 5, a pair of right and left rails 6, a pair of hydraulic locating plugs 7 which may be inserted in recesses formed at the bottom of a work pallet 4 to fix the position of the work pallet 4, a guide rail 8 which may guide the work pallet 4 by slidable engagement with a guide groove 36 formed at the bottom of the work pallet 4, a set of supporting blocks 9 which may support a work pallet 4 horizontally, and flange clamping parts formed at the top of piston rods each disposed within a supporting block 9. The pallet fixing device 2 may be integrated with the table 1.

The pallet revolution system 3 is located in front of the table 1 which is located at an initial setting position (shown in Figure 1 as full line). This system 3 comprises a rotary carrier 12, a supporting frame 13, a pallet clamping system 15, a locking device 46 for locking the carrier, a push-pull system 82 to move a work pallet, a hydraulic power system (not shown) and a control means (also not shown). In the lower part of the pallet revolution system 3, a chip washing system W is disposed.

The rotary carrier 12 is made in box form from steel sheets to provide sufficient strength and lightness thereof, and comprises two pallet mounting parts 12a on the top and bottom surfaces thereof. Supporting shafts 16 project from the centre of the end surface of the carrier to allow the supporting frame 13 to support them for rotation. A horizontal rotary axis 16a passes through the centre of the rotary carrier 12 and is set parallel with the X axis (directed to right and left sides) in the coordinates of the machining centre M. The rotary frame 12 may be made either from steel bars and sheets to form a skeletal frame of from thick steel plate.

When the rotary carrier 12 is driven by the driving means 14, each pallet mounting part 12a changes its position between a pallet changing position X, which is located in front of the pallet fixing device 2, and retracted position Y, which is under the pallet changing position X.

The driving means 14 comprises a pinion 17 disposed on a terminal part of the left supporting shaft 16, a rack 19, which is connected with the piston rod of a vertical hydraulic cylinder 18, engaged with the pinion 17, and an auxiliary frame 20 which supports the rack 19. The driving means can rotate the carrier through half a revolution and back again.

The driving means 14 may include an electric pneumatic or hydraulic motor and a transmission such as sprockets and chains, or pulleys and belts, or reduction gear train, and the motor may comprise an oscillating motor or an arrangement of (pneumatic or hydraulic) cylinders. Particularly, as shown in Figure 11, the driving means 14 may comprise two hydraulic cylinders 58 and a chain 59 which is connected to the piston rod 58a of each cylinder 58 at each end and engages a sprocket 60 driving shaft 16. Of course, various known power systems may be used as the driving means in the present embodiment. If the work pallets 4 are small, a manual driving means 14 may be used to drive the rotary carrier 12.

Both on the top and bottom surface of the rotary carrier 12, each pallet mounting part 12a is formed and provided with an engaging system 15 and a pair of right and left stoppers 25. The engaging system 15 comprises a pair of rails 21, a guide rail 22, six supporting blocks 23, and six hydraulic pallet clamps 24 in the same manner with corresponding parts on the pallet fixing device 2, and moreover four hydraulic locating plugs 45.

In order to supply pressurized oil to the hydraulic pallet clamps 24 and hydraulic work clamp 33 on the work pallet 4, a rotary joint 26 is provided at the outer end of right supporting shaft 16 and four oil passages are led from the hydraulic feed unit to the rotary frame 12. Reference 27a designates the oil passage to the pallet engaging system 15, and 27b designates the oil passage to the clamp frames 30 disposed on the front and rear sides of the work pallet 4. The other oil passages are provided for another pallet mounting part 12a similarly. It is possible to include a directional control valve so as to reduce the number of oil passages passing through the rotary joint 26, or to connect long flexible hydraulic hoses to the rotary carrier directly, so as to avoid use of the rotary joint 26. Further, as shown in Figure 10, it is preferable to dispose a cooperative half 38 of a self-seal coupling at the right end part of each pallet mounting part 12a communicating it to the oil passage passed through the rotary joint 26, and a corresponding plug half 39 of the self-seal coupling on the right end surface of each work pallet 4 to communicate it with oil passages to the work clamp 33, so as to realize the automatic coupling of these halves 38, 39 when a work pallet 4 is moved from the pallet fixing device 2 to the pallet mounting part 12a and stopped by the stoppers 25.

The pallet engaging system 15 serves to secure the work pallet 4 while the rotary carrier 12 is rotated, and comprises clamps 24 and locating plugs 45, whereby the plugs 45 may be inserted into the recesses formed at the bottom surface of the work pallet 4, and the work pallet 4 may be clamped on the pallet mounting part 12a after the transfer of the work pallet 4 from the pallet fixing device.

Instead of the pallet clamping system 15, a system which comprises a hydraulic cylinder whose piston rod is fitted into locating recesses formed in the right and left end surfaces of the work pallet, or bolts or pins may be used. Moreover, mechanical tightening or engaging means, vacuum or electro-magnetic attractive means, tightening or engaging means can take the place of the system 15.

The locking device 46 serves to lock the rotation of the rotary frame 12 after every half rotation thereof, and comprises a pair of front and rear hydraulic cylinders disposed horizontally respectively at the right and left sides of the supporting frame 12 so as to lock the rotation of the rotary frame with lock members 46a extended under the rotary frame 12 by the cylinders after the rotation of the rotary frame 12.

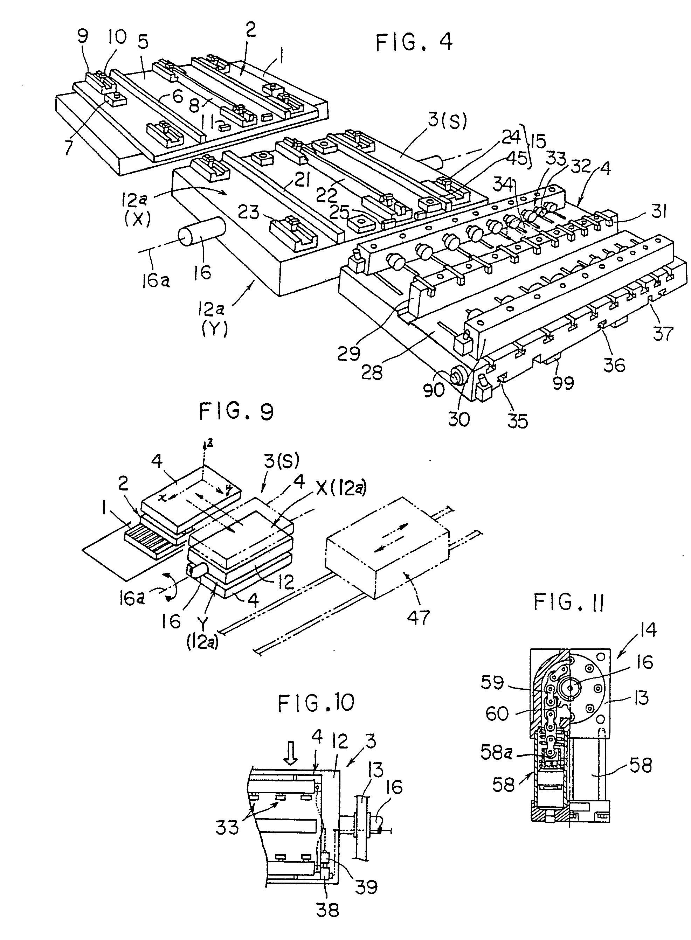

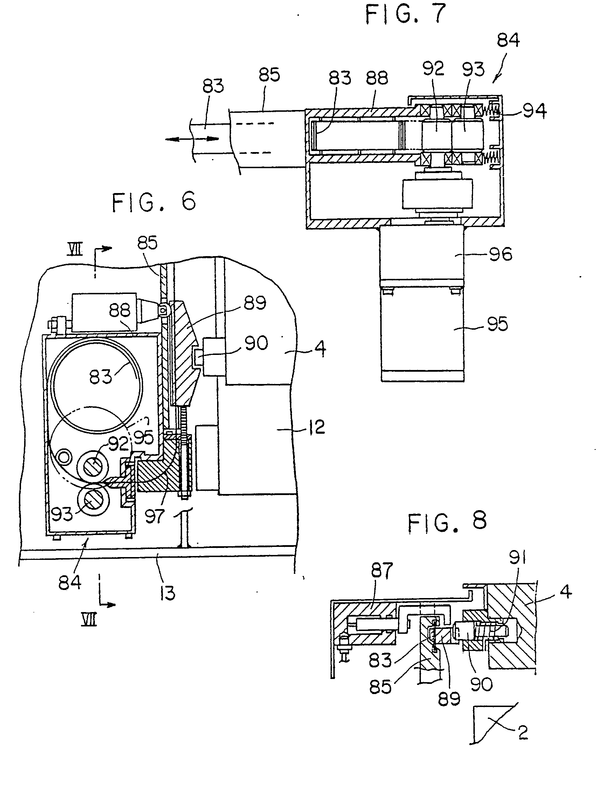

As shown in Figures 4 and 5, each work pallet 4 is provided with a base 28, a normalizing or reference frame 29 fitted on the base 28, and a pair of clamp frames 30 disposed at both front and rear sides of the normalizing frame 29. The distance between each clamp frame 30 and the normalizing frame 29 is preferably adjustable. Locators 31 are fitted on the top of the normalizing frame 29 at a predetermined pitch. The clamp members 32 are individually put at the end of the piston rod of each hydraulic cylinder associated in the clamp frame 30, and are disposed along the clamp frame 30 at the predetermined pitch in order to clamp a plurality of workpieces at positions determined by the locators 31 and the normalizing frame 29.

On the bottom face of the base 28, three T-shaped grooves 35, 36 are disposed to allow relative movement between the work pallet 4 and clamping parts of the clamp system 10 or the clamps 24 of the clamp system 15 during the conveyance of the work pallet 4. The vertical part of the central T-shaped groove is used as the guide groove 36 corresponding to the guide rails 8 and 22.

Moreover, transport rollers (not shown) may be fitted in a pair of right and left square grooves 37 elevatable up and down. When the work pallet 4 is free from the clamps 10 and/or 24, the travelling rollers are pushed down by springs to expose the treads of the travelling rollers below the base 28 so that these rollers can travel on the rails 6 and/ or 21.

Besides, if the clamps 10 and 24 of the pallet fixing device 2 and pallet revolution system 3 are simplified according to the manner described later, it is possible to omit the T-shaped grooves 35 for clamping base 28. By the adoption of conveyance roller arrangements (mentioned later) on the pallet fixing device 2 and each pallet mounting part 12a, the travelling rollers may be omitted from the work pallet.

Further, by disposing guide rails 8 and 22 to be slidably contacted with the side end surfaces of the work pallet 4 or on the member attached to the work pallet 4, it is possible to omit the guide groove 36 of the work pallet, and to simplify the structure of work pallet 4.

It should be clearly understood that the structure of the work pallet is not limited to the aforementioned type, and that work pallets of various types may be used in the present embodiment.

The push-pull system 82 serves to move a work pallet 4 by pushing or pulling it between the pallet mounting part 12a located at pallet changing position X and the pallet fixing device 2. This system 82, as shown in Figures 6—8, comprise a steel belt 83, driving means 84, two guide rails 85 and 86 disposed before and behind, and a cylinder 87 for disengagement. At the left side of the rotary carrier 12, the driving means 84 is disposed in the front part of the supporting frame 13, and the front guide rail 85 is disposed on the middle part and rear part of the supporting frame 13. The rear guide rail 86 and the cylinder 87 are disposed on the table 1.

The steel belt 83 is made from spring steel and, as shown in Figure 6, forms a spiral at its free end. The initial part of the spiral is contained in the box frame 88 of the driving means 84 and the other end travels inside the guide rails 85 and 86. A hook 89 is fixed on the other end of the steel belt 83. This hook 89 may be engaged with a pin 90 which is provided on the work pallet 4 and biased to the left by a spring 91 (shown in Figure 8).

The driving means 84, as shown in Figures 6 and 7, comprises a drive roller 92 for driving the steel belt 83 and a pinch roller 93 which pushes the belt 83 on the periphery of the driving roller 92 by the pressure of a spring 94, a motor 95 with a brake, and a speed reduction mechanism 96. The steel belt 83 is driven out and back through a passage 97 by the motor 95 coupled to the speed reduction mechanism 96 and the driving roller 92 so that it travels in the guide rails 85 and 86 to carry the push-pull driving. Thus, by this push-pull driving, the work pallet 4 is pushed or pulled toward the rear or front.

The cylinder 87 for disengagement, as shown in Figure 8, may push the pin 90 to the right against the spring 91 so as to disengage the pin 90 from the hook 89, and to leave the work pallet 4 on the pallet fixing device 2.

The chip washing system W, as shown in Figures 2 and 3, is provided for removing chips from work pallet 4 and any workpieces thereon. It is disposed in the lower part of pallet revolution system 3, and is adapted to face a work pallet 4 when the respective pallet mounting part 12a is located at the retreated position Y. The washing system should not engage the rotary carrier 12 or work pallets 4 when they are rotated. The washing system may be moved up and down.

The washing system W has many jet nozzles 42 disposed in a plurality of rows at the upper part, a chip receiving box 43 at the middle part, a reserve tank 44 for cleaning liquid at the lower part thereof, and at the same time a system, which is not shown in the drawings, for pressurizing and supplying cleaning liquid. The cleaning liquid which may be the same as that used during machining, is pressurized and fed from the tank 44 to the nozzles 42 by the system for pressurizing and supplying of cleaning liquid, then expelled towards the work pallet 4 and any workpiece thereon so as to wash out chips. These chips may be collected in the box 43, and cleaning liquid may drain into the reserve tank 44. This washing system W may be fixed to the supporting frame 13 or made as a removable unit. Further, a mesh belt conveyor for carrying chips away may be provided instead of the chip receiving box 43. Furthermore, it may be possible to collect workpieces 34 on the washing system W after the cleaning operation.

Now, the manner to change the work pallet 4 by means of the work pallet changer will be described below.

While a workpiece on a work pallet 4 on the pallet fixing device 2 is being machined, unfinished or untreated workpieces 34 are located and clamped on another work pallet located at the pallet changing position X. Then, the rotary carrier 12 is half-rotated so as to move the prepared work pallet 4 to the retreated position Y and to move an empty pallet mounting part 12a to the pallet changing position X. After this rotation, the rotary carrier 12 is locked by the locking device 46.

After the machining of the workpieces on the work pallet fixed on the table 1, the respective locating plugs 7 are disengaged and the clamp system 10 is loosened at the same time. Then, the work pallet 4 with finished workpieces is moved onto the empty pallet mounting part 12a by means of the push-pull system 82. When engaging members 99 (Figure 4) disposed to extend from the bottom of the work pallet 4, are received by stoppers 25, clamps 24 are actuated to fix the work pallet 4 above the supporting frame 23; at the same time, locating plugs 45 are inserted into the fitting recesses of the work pallet 4 so as to fit the work pallet 4 on the pallet mounting part 12a, and the oil supply for the work clamp 33 is opened.

Then, the locking device 46 is disengaged, and the driving means 14 is actuated to rotate the rotary carrier 12 by a half-revolution so that the work pallet 4 with finished workpieces is moved to the retreated position Y, and that the work pallet 4 with new workpieces is moved to the pallet changing position X. After this rotation of the rotary carrier 12, locking device 46 is actuated again to lock the rotary carrier against rotation and the located plugs 45 are withdrawn from the pallet 4.

Then, the prepared work pallet 4 with new workpieces is pushed by the push-pull system 82 so as to move it onto the pallet fixing device 2. At this time, clamp members of clamp system 10 are loosely fitted in the T-shaped grooves 35 of the work pallet 4 and the guide rail 8 is fitted in the guide groove 36 to guide the travelling of the work pallet 4. The work pallet 4 is stopped at the predetermined location by the engagement of engaging members 99 and the stoppers 11, and its location is fixed by the insertion of locating plugs 7 into the corresponding recesses, and the pallet is secured on the supporting blocks 9 by the actuation of the clamp system 10 in preparation for the machining of the new workpieces.

The removing of chips from the work pallet 4 with finished workpieces is carried out by chip washing system W, in parallel with the transfer of another work pallet to the pallet fixing device 2. Then, the rotary carrier 12 is rotated to return the work pallet 4 with its workpieces to the pallet changing position X and the carrier is locked. The work clamps 24 are loosened, and the finished workpieces are taken from the work pallet 4. If any chips remain on the work pallet 4 at this time, the empty work pallet 4 can be inverted again for washing by the chip washing system W. After the washing operation, the work pallet 4 will be returned to the pallet changing position X.

The same process may be repeated as often as necessary.

The push-pull system 82 may be omitted when the work pallet 4 is transferred manually.

One or more bogies 47 (Figure 9) for pallet conveyance may be provided in front of the pallet revolution system 3. In this case, each work pallet 4 is prepared by exchanging the finished workpieces for new workpieces at a work changing station which is disposed elsewhere within the factory, carried by means of the bogie 47, and transferred between the bogie 47 and the pallet revolution system 3.

Further, it is possible to carry a work pallet 4 to and from the pallet mounting part 12a located at pallet changing position X by means of a crane.

Moreover, it is possible to associate pallet revolution system 3 and chip washing system W with an automotive bogie which can traverse in front of a plurality of machining centres M, which can thereby use one pallet revolution system 3 and one chip washing system W in common. Besides, a pallet revolution system 3 and a chip washing system W need not be fixed in front of the machining centre M. That is, these systems 3 and W may be installed on an automotive support which may move forwards and backwards for a predetermined distance so as to move them away from the pallet fixing device 2 when the rotary carrier 12 is rotated, and back close to the pallet fixing device 2 when a work pallet 4 is transferred thereto and therefrom. This expedient is more advantageous if the effective radius of the carrier is large owing to the size of a workpiece.

However, it is possible to increase the effective radius of rotary carrier 12 even if the pallet revolution system 3 is disposed in a fixed position by locating the system 3 a little further from the machining centre M, and providing it with one or more travelling rails or conveyance roller arrangements which may be removable or hinged.

Furthermore, it is possible to dispose a plurality of pallet revolution systems 3 in front of a machining centre M in the manner described later, so as to change work pallet 4 between these systems.

As shown in Figure 12, it is possible to dispose four pallet mounting parts 12a on the peripheral surface of a rotary frame 12 which is rotatable around the revolutional axis 16a by forming the section of the frame 12 as a square, and to fix four work pallets 4 on these pallet mounting parts 12a individually.

It is also possible to dispose five or six pallet mounting parts 12a on a rotary frame 12 in a similar manner.

If a large number of pallet mounting parts 12 are disposed in a pallet revolution system 3, it is possible to realize unmanned operation of machining centre M for a long time, for example, through a night by the automatic change of work pallets between the pallet fixing device 2 and the pallet revolution system 3.

The Second Preferred Embodiment (ref. Figures 13 to 17).

In this preferred embodiment, a pallet fixing device 2 comprises a pair of carry roller arrangements 48, locators 49, pull type clamps 50, depression type clamps 51 and supporting blocks 52 on the base plate 5.

Each carry roller arrangement 48, as shown in Figures 16 and 17, comprises a roller support frame 53 depressed by springs 55 with respect to axial member 54 and hydraulic cylinders 56 to elevate the roller support frame 53.

The free rollers 57 supported by the roller support frame 53 are overhung on both right and left sides thereof in order to prevent encroachment of chips into these rollers 57 letting chips freely escape from the roller support frame 53 toward both right and left sides thereof.

Each locator 49, as shown in Figure 15, comprises a main member 61 and a receiving member 62 which is fixed on the main member 61 and provides fine adjustment of the height of the receiving surface along the inclined surface of the main member 61. Each pull type clamp 50 has a clamp arm 64 which is swung out by a hydraulic cylinder from a position retracted under the top surface of the body 65 so as to push the work pallet 4 toward the locators 49 in order to locate it exactly. The depression type clamps 51 depress a located work pallet at the side where a pull type clamp 50 is disposed, that is, the right side in Figure 15.

A work pallet 4 is transferred while the roller support frame 53 is elevated and fixed on supporting blocks 52 and supporting part 100 of the locator 49 by clamps 50, 51 after the roller support frame 53 is depressed down. Numeral 75 in Figure 15 designates one of the guide members.

In Figure 13, two lines of carry roller arrangement 48A, a push-pull system 68 and an engaging system 15 are disposed on each pallet mounting part 12a of the rotary carrier 12 of pallet revolution system 3.

Each carry roller arrangement 48A comprises a roller support frame 53A fixed on the rotary frame 12 and free rollers 57A supported thereon. At the same time each carry roller arrangement 48 serves as a support for the work pallet 4 on each pallet mounting part 12a.

The push-pull system 68 comprises a three stage telescopic hydraulic cylinder 67, a hydraulic cylinder 66 to swing the cylinder 67 and an engaging part 69. This engaging part 69 is engaged with an engaging member 70 disposed under the bottom of the work pallet 4 while the work pallet 4 is pushed to or pulled from the pallet fixing device 2, and disengaged with the engaging member 70 when the cylinder 66 pulls the cylinder 67 to the left. This push-pull system 68 may be disposed at right and/or left side parts of each pallet mounting part 12a.

The push-pull system 68 may be modified variously. For example, it may comprise driving rollers disposed on carry roller arrangements 48, 48A instead of free rollers 57, 57A, and (electric, pneumatic or hydraulic) motors which drive these rollers backwards and forwards by chains or other means for transmission. Further, one of the mechanisms individually shown in Figures 18 to 21 may be adapted to drive a member 69A corresponding to the engaging part 69 forward and reverse. In the Figures, numerals 76, 77 designate racks; 78 a pinion; 79 a hydraulic cylinder; 80 a link; 81 a chain or wire.

The engaging system 15, as shown in Figures 13 and 14, comprises engaging pins 71 and right and left hooks 72. The hooks 72 do not disturb the forward and backward movements of the work pallet 4, but they restrict the movement of the work pallet 4 to the right, left, or up and down. Each engaging pin 71 has a hydraulic cylinder to elevate the pin so as to prevent the work pallet sliding out of the pallet mounting part 12a when it is inclined by the rotation of the rotary carrier 12.

Moreover, a locking device 46 comprises lock pins disposed on piston rods of each hydraulic cylinder to insert them in recesses formed on the side end surfaces of the rotary carrier.

In the preferred embodiments aforementioned, in order to change a work pallet 4 automatically between the pallet revolution system 3 and the pallet fixing device 2, commands or signals may be exchanged between the control means of machining centre M and that of work pallet changer, and the systems and devices provided for the pallet revolution system 3 and pallet fixing device 2 may be controlled by the latter control means in accordance with a predetermined sequence. In this case, sensing means for sensing the location of the work pallet 4 or for sensing the position of rotary carrier 12 are disposed as required and the signals generated thereby are sent to these control means.

Moreover, the work pallet changer according to the present invention may be used not only with a machining centre provided with a vertical main spindle, but also a machining centre provided with a horizontal main spindle. In each case the work pallet changer may be installed either in front of or to one side of the table 1 of the machine tool.

The work pallet changer according to the present invention may be adaptable to not only a machining centre, but vertical or horizontal machine tools of various sorts such as milling machine, planer, shaper, boring machine, drilling machine, and so on.

**Claims**

1. A work pallet changer for use with a machine tool which has a horizontal table (1) adapted for the accommodation of work pallets (4), the changer comprising a shift system which includes a rotary carrier (12), rotatable about a horizontal axis (16a) and having a plurality of pallet-mounting stations (12a) each of which is adapted for holding a pallet and is moved on rotation of the rotary carrier (12) between a pallet-changing position (X), suitable for the transfer of a pallet to or from the table, and another position (Y) displaced from the pallet-changing position, and a push-pull transfer system (82) for moving the pallet between a pallet fixing device (2) on the table of the machine tool and a pallet-mounting station (12a) located at the pallet-changing position, characterised in that each pallet-mounting station includes a straight guide rail (22) for engagement with the pallet so as to guide the movement of a pallet between the table and the pallet-changing position along a straight path, the guide rail being at right angles to the said rotary axis (16a).

2. A work pallet changer according to claim 1 in which a respective pallet-engaging system (15) is provided for each pallet-mounting station to hold a pallet on the respective pallet-mounting station.

3. A work pallet changer according to claim 2 and in combination with a machine tool of which one axis is parallel to said rotary axis.

4. A work pallet changer according to any preceding claim, in which the rotary carrier (12) is in the form of a plate and at least one pallet-mounting station is disposed on each of the broad faces of the plate.

5. A work pallet changer according to any preceding claim in which the rotary axis passes through the centre of the carrier.

6. A work pallet changer according to any preceding claim in which a chip or swarf washing system (W) is disposed to provide upwardly directed cleaning jets from below the rotary carrier.

**Patentansprüche**

1. Werkstückpalettenwechsler zur Verwendung mit einer Werkzeugmaschine, die einen horizontalen Tisch (1) besitzt, der zur Aufnahme von Werkzeugpaletten (4) geeignet ist, mit einer Wechseleinrichtung, die einen Drehträger (12) enthält, der um eine horizontale Achse (16a) drehbar ist und eine Vielzahl von Paletten fassenden Stationen (12a) besitzt, von denen jede zum Halten einer Palette geeignet ist und während der Drehung des Drehträgers (12) zwischen einer Palettenwechselposition X, die zum Transfer einer Palette zum oder vom Tisch geeignet ist, und einer anderen Position Y, die im Abstand von der Palettenwechselposition liegt, bewegt wird und mit einer Gegentakttransfereinrichtung (82) zur Bewegung der Palette zwischen einer Palettenfeststellvorrichtung (2) auf dem Werkzeugmaschinentisch und einer Paletten fassenden Station (12a), die an der Palettenwechselposition liegt, dadurch gekennzeichnet, daß jede Paletten fassende Station eine gerade Führungsschiene (22) zum Eingriff mit der Palette aufweist, um die Bewegung einer Palette zwischen dem Tisch und der Palettenwechselposition entlang eines geraden Weges zu führen, wobei die Führungsschiene in rechten Winkeln zu der Drehachse (16a) liegt.

2. Werkstückpalettenwechsler nach Anspruch 1, bei dem eine Paletteneingriffeinrichtung (15) für jede Paletten fassende Station vorgesehen ist, um eine Palette auf der Paletten fassenden Station zu halten.

3. Werkstückpalettenwechsler nach Anspruch 2 und in Kombination mit einer Werkzeugmaschine, bei der eine Achse parallel zu der Drehachse ist.

4. Werstückpalettenwechsler nach einem der vorhergehenden Ansprüche, bei dem der Drehträger (12) die Form einer Platte besitzt und mindestens eine Paletten fassende Station auf jeder Breitseite der Platte angebracht ist.

5. Werkstückpalettenwechsler nach einem der vorhergehenden Ansprüche, bei dem die Drehachse durch den Mittelpunkt des Trägers geht.

6. Werkstückpalettenwechsler nach einem der vorhergehenden Ansprüche, bei dem eine Spanwascheinrichtung (W) so angeordnet ist, daß nach oben gerichtete Reinigungsstrahlen von unterhalb des Drehträgers vorgesehen sind.

**Revendications**

1. Changeur de palettes porte-pièces pour association à une machine-outil qui présente une table horizontale (1) propre à recevoir des palettes porte-pièces (4), le changeur comprenant un système de déplacement qui comporte un support rotatif (12), tourillonnant autour d'un axe horizontal (16a) et comportant une série de postes de montage de palette (12a) dont chacun est propre à maintenir une palette et est déplacé lors de la rotation du support rotatif (12) entre un emplacement de changement de palette (X), convenable pour le transfert d'une palette sur la table ou hors de celle-ci, et une autre position (Y) décalée par rapport à la position de changement de palette, et un système de transfert par poussée-traction (82) propre à déplacer la palette entre un dispositif de fixation de palette (2) situé sur la table de la machine-outil et un poste de montage de palette (12a) situé à l'emplacement de changement de palette, caractérisé en ce que chaque poste de montage de palette comporte un rail de guidage rectiligne (22) propre à coopérer avec la palette afin de guider le mouvement d'une palette entre la table et l'emplacement de changement de palette suivant une trajet rectiligne, le rail de guidage étant perpendiculaire audit axe de rotation (16a).

2. Changeur de palettes porte-pièces selon la revendication 1 dans lequel un système d'accrochage de palette respectif (15) est affecté à chaque poste de montage de palette pour maintenir une palette sur le poste de montage de palette respectif.

3. Changeur de palettes porte-pièces selon la revendication 2 et en combinaison avec une machine-outil dont un des axes est parallèle audit axe de rotation.

4. Changeur de palettes porte-pièces selon une quelconque des revendications précédentes, dans lequel le support rotatif (12) se présente sous la forme d'une plaque et au moins un poste de montage de palette est disposé sur chacune des grandes faces de la plaque.

5. Changeur de palettes porte-pièces selon une quelconque des revendications précédentes dans lequel l'axe de rotation passe par le centre du support.

6. Changeur de palettes porte-pièces selon une quelconque des revendications précédentes dans lequel un système de lavage de copeaux ou de limaille (W) est disposé en sorte d'émettre des jets de nettoyage dirigés vers le haut à partir de dessous le support rotatif.

FIG. 1

FIG. 2

FIG. 3

FIG. 5

FIG. 4

FIG. 9

FIG. 10

FIG. 11

FIG. 7

FIG. 6

FIG. 8

3

FIG.12

FIG.13

FIG.14

FIG.15

**0 132 409**

FIG.22

104

109

103 X

107

108 Y 101

101

106

102

105

FIG.23

106

105

III(X)

112

III(Y)

FIG.24

105
106

122 123

121

121

121 121

5

FIG.16

FIG.17

FIG. 18

FIG. 19

FIG.20

FIG. 21